# EUROPEAN PATENT SPECIFICATION

(11) **EP 3 714 095 B1**
(45) Date of publication and mention of the grant of the patent: **05.01.2022**
(21) Application number: 18825782.8
(22) Date of filing: 23.11.2018
(51) Int. Cl.: A47J 27/06, D06F 58/30, F22B 1/28, D06F 58/20, D06F 39/00

(54) **STEAM GENERATION SYSTEM FOR USE IN A HOUSHOLD APPLIANCE**
DAMPFERZEUGUNGSSYSTEM ZUR VERWENDUNG IN EINEM HAUSHALTSGERÄT
SYSTÈME DE GÉNÉRATION DE VAPEUR DESTINÉ À ÊTRE UTILISÉ DANS UN APPAREIL ÉLECTROMÉNAGER

(30) Priority: 23.11.2017 IT 201700134614
(43) Date of publication of application: 30.09.2020
(73) Proprietor: I.R.C.A. S.p.A. Industria Resistenze Corazzate e Affini, 31029 Vittorio Veneto (IT)
(72) Inventor: ZOPPAS, Federico, 31100 Treviso (IT); BIASI, Maurizio, 31043 Fontanelle (IT); DURIGON, Giacomo, 31055 Quinto di Treviso (IT); TAFFAREL, Otello, 31029 Vittorio Veneto (IT)
(74) Representative: Celona, Antonio
(86) International application number: PCT/IB2018/059254
(87) International publication number: WO 2019/102408

(56) References cited:
- EP-A1- 0 595 077
- EP-A2- 1 925 881
- WO-A1-2017/186507
- WO-A2-2013/069823
- GB-A- 2 158 210

## Description

### Field of the invention

The present invention relates to a steam generation system with possibility of dosing the amount of steam. The steam generation system is particularly adapted to be used in a household appliance, e.g. a tumble dryer or a domestic oven with steam cycle or another household appliance.

### Background art

Steam generation systems, e.g. for tumble dryers, often use a pump for feeding, dosing a flow of water, an electric heater. The electric heater converts the water into steam, which is then introduced into the basket of the tumble dryer according to the intended cycle. In particular in household appliances, such as tumble dryers, dosing the steam is an important requirement in order to ensure a successful steam cycle with a result appreciated by users.

Using a pump in a steam generation system offers advantages because it allows accurate dosing of the water flow introduced into the heater. However, the pump is an expensive and delicate device.

EP1925881A discloses a solution which includes the application of valves in a steam generation system. The system described in EP1925881A does not allow dosing a precise amount of water to be sent to the steam generator. In this system, a pipe is provided which exits from the tank. Such a pipe is used only for introducing air during the passage of water from the tank to the evaporator, and the inner diameter of such pipe does not affect the amount of water sent to the steam generator.

Therefore, the need is felt to find a steam generation system solution which also allows dosing water, and thus steam, which is cost-effective to manufacture.

### Summary of the invention

It is an object of the present invention to provide a steam generation system which overcomes the drawbacks mentioned above and which offers a more accurate dosing capacity at a low cost.

In particular, it is an object of the present invention to allow the dosing of an amount of liquid to be sent to the steam generator, and therefore the dosing of the amount of steam produced.

It is another object of the present invention to provide a steam generation system which is constructionally simple.

Therefore, the present invention aims to achieve at least one of such objects by providing a steam generation system for household appliances, comprising:
- a tank adapted to contain a liquid to be heated to generate the steam;
- a dosing device;
- a first pipe adapted to connect the tank to the dosing device, in particular fluidically, the tank and the dosing device being arranged so as to define a communicating vessel system;
- a steam generator arranged downstream of the tank and of the dosing device;
- a second pipe adapted to connect, in particular fluidically, at least one part of the first pipe to the steam generator;
- a valve, preferably an intercept valve, having a first position in which it allows the passage of liquid from said at least one part of the first pipe to the steam generator, and a second position, in which it prevents the passage of liquid from said at least one part of the first pipe to the steam generator.

In particular, the valve is arranged between said at least one part of the first pipe and said second pipe.

In particular, when the valve is in the first position, the liquid contained in the dosing device can flow into the steam generator; and when the valve is in the second position, the liquid contained in the tank can flow into the dosing device, but cannot flow from the dosing device to the steam generator.

In more detail, said first position is preferably an opening position of the valve, in which the liquid can pass from the dosing device to the tank.

In a first embodiment, said second position can be a closing position, in which the valve prevents the passage of liquid from said at least one part of the first pipe (and therefore from the dosing device) to the steam generator.

In a second embodiment, said second position can be an opening position which connects (in particular, fluidically connects) the tank to the dosing device, so that the liquid contained in the tank can flow into the dosing device, the second position concurrently being a position which prevents the passage of liquid from said at least one part of the first pipe (and therefore from the dosing device) to the steam generator.

The invention also comprises a method of operating such a steam generation system for a household appliance, wherein the following steps are included:
a) providing a liquid in the tank, and the valve in the second position to fill the dosing device through the first pipe by means of the communicating vessel principle;
b) arranging the valve in the first position to make the liquid present in the dosing device flow in the steam generator;
c) arranging the valve in the second position and heating the steam generator until the liquid present in the steam generator evaporates.

Advantageously, the system of the invention makes it possible to send a predetermined or a dosed amount of liquid, e.g. water, to the steam generator. In particular, this amount of water is either mainly or only the water contained in the dosing device.

The invention also comprises an electric household appliance, in particular a tumble dryer or an oven, provided with a steam generation system as defined above. Further features and advantages of the present invention will become more apparent in light of the detailed description of preferred, but not exclusive embodiments.

The dependent claims describe particular embodiments of the invention.

### Brief description of the drawings

The description of the invention refers to the accompanying drawings, which are provided by way of non-limiting example, in which:
Fig. 1 shows a diagram of the hydraulic circuit of a first embodiment of a steam generation system according to the present invention in a first operating position;
Fig. 2 shows the diagram in Fig. 1 in a second operating position;
Fig. 3 shows a diagram of the hydraulic circuit of a second embodiment of a steam generation system according to the present invention in a first operating position;
Fig. 4 shows the diagram in Fig. 3 in a second operating position;

Equal reference numerals in the various figures correspond to the same elements or components.

### Detailed description of exemplary embodiments of the invention

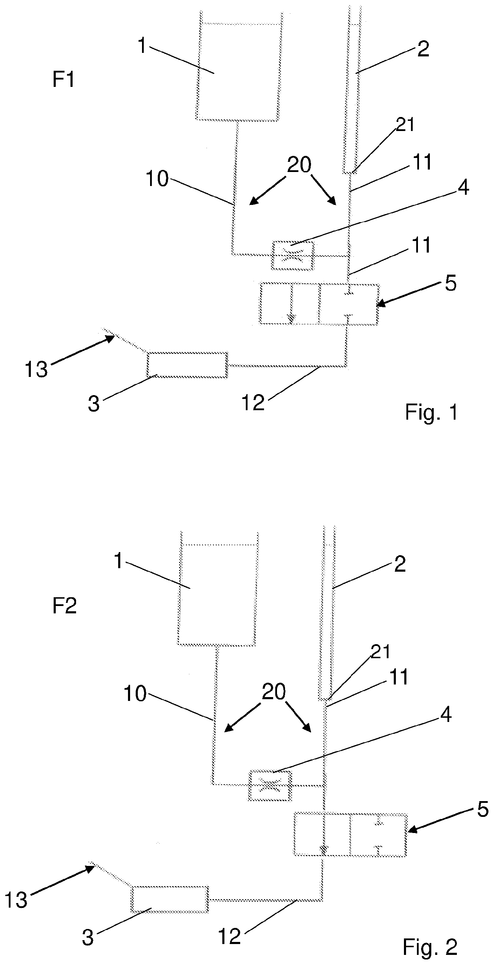

Figures 1 and 2 show a diagram of a first embodiment of a steam generation system according to the invention. The steam generation system comprises a tank 1 for a liquid, e.g. water, to be transformed into steam by heating. A dosing device 2 is provided for dosing an amount of water, and a steam generator 3, or evaporator, in which said amount of water is evaporated by taking it to its evaporation temperature by means of one or more heating elements inserted into the evaporator 3 or otherwise arranged so as to transfer the heat energy to the water. A pipe 13 makes the steam exit from the evaporator 3 towards the space where the steam must be used, e.g. a basket of a tumble dryer or the cooking space of a food cooking oven.

Preferably, the dosing device 2 is completely outside the tank 1, and preferably distinct from the tank 1. For example, the dosing device 2 can be spaced apart from the tank 1 or the dosing device 2 can be adjacent, i.e. attached, to the tank 1. The dosing device 2 is a container configured to contain a volume of water preferably less than the tank 1. In other words, the dosing device 2 is preferably a dosing container or receptacle.

Preferably, the dosing device 2 comprises a bottom wall 21, or bottom. In particular, the bottom wall 21 closes the dosing device 2 on the bottom. Preferably, the bottom wall 21 is at a lower level than the level of the bottom wall of the tank 1.

The tank 1 is connected to the dosing device 2 by means of a first pipe 20, having a pipe segment 10 and a pipe segment 11.

The pipe segment 10 is connected, preferably directly connected, to the tank 1.

The pipe segment 11 is connected, preferably directly connected, to the dosing device 2, preferably but not exclusively to its bottom wall 21.

Preferably, the pipe 20 is distinct from the dosing device 2, and preferably has a smaller section than the dosing device 2.

A choke 4 is preferably arranged along the first pipe 20. In particular, the choke 4 is arranged between the pipe segment 10, connected to the tank 1, and the pipe segment 11 connected to the dosing device 2. The choke 4 may be a restriction or choke, of the first pipe 20 or a component arranged along the first pipe 20.

A valve 5, preferably an intercept valve, preferably two-way, two-position valve (opening position and closing position) is arranged between the first pipe 20 and a second pipe 12. In particular, the intercept valve 5 is arranged between the pipe segment 11 and the second pipe 12 which takes the water to the steam generator 3. The second pipe 12 and the first pipe 20 are alternately put into communication and interrupted by the valve 5 as a function of the position taken by the latter.

Preferably, the valve 5 is proximal to the dosing device 2 and distal from the tank 1. For example, the minimum distance between the valve 5 and the dosing device 2 is preferably smaller than the minimum distance between the valve 5 and the tank 1.

In Figure 1, which shows working step F1, the valve 5 is in the closing position and interrupts the flow of the water from the first pipe 20 to the second pipe 12.

Figure 2 shows the valve 5 in the opening position, so as to put the first pipe 20 into communication with the second pipe 12.

The working cycle of this first embodiment of the evaporation system is the following. In the first step F1, the water flows from the tank 1 to the dosing device 2 in which it establishes the dosing level by means of the communicating vessel principle. Successively, in step F2, the valve 5 is opened so that the water flows from the dosing device 2 and from the tank 1 to the steam generator 3. The amount of water coming from the tank 1 is less than that coming from the dosing device 2, in particular for the presence of the choke 4 which reduces the water flow coming from pipe segment 10. By defining the size of pipe segments 10 and 11, of the choke 4 and the volume of the dosing device 2 in design, it is possible to determine the amount of water which flows inside the steam generator 3. The valve 5 is closed when the prescribed dosing of water is reached in the steam generator 3. The steam generator 3 is then heated until the dosed water evaporates and produced steam is sent to its place of use. Since the valve 5 is closed, the steam can escape only from the part of use and not back in the dosing device 2 through the pipe 12 and the pipe segment 11. The cycle described above can be repeated until the desired amount of steam is obtained.

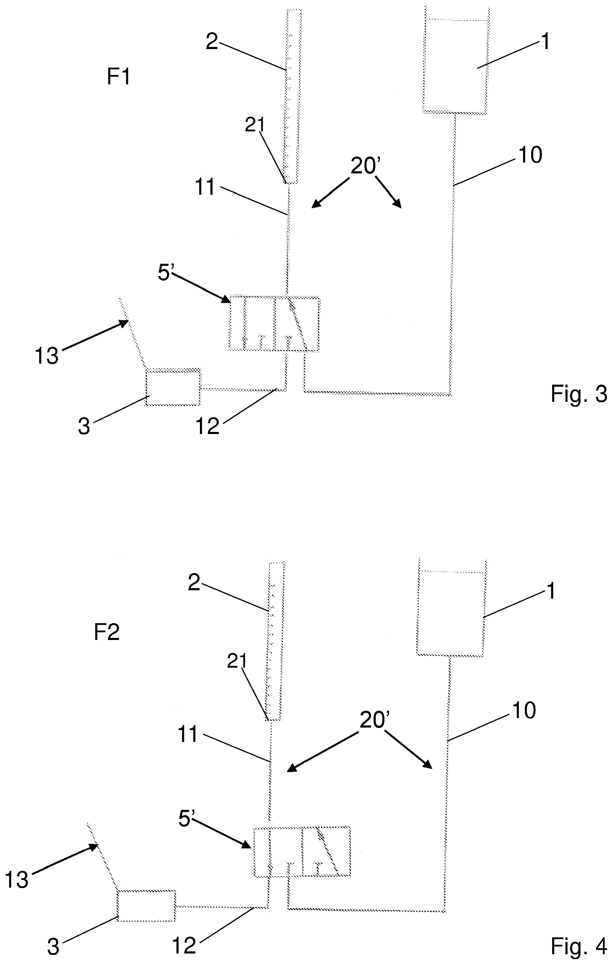

A second embodiment of the steam generation system or evaporation system is shown in figures 3 and 4. This circuit comprises a water tank 1, a dosing device 2, a valve 5', preferably an intercept valve, preferably a three-way and two positions valve, and a steam generator 3. Preferably, the dosing device 2 is completely outside the tank 1, and preferably distinct from the tank 1. For example, the dosing device 2 can be spaced apart from the tank 1 or the dosing device 2 can be adjacent, i.e. attached, to the tank 1. The dosing device 2 is a container configured to contain a volume of water, preferably less than the tank 1. In other words, the dosing device 2 is preferably a dosing container or receptacle.

Preferably, the dosing device 2 comprises a bottom wall 21, or bottom. In particular, the bottom wall 21 closes the dosing device 2 on the bottom. Preferably, the bottom wall 21 is at a lower level than the level of the bottom wall of the tank 1.

The tank 1 is connected to the dosing device 2 by means of a first pipe 20', having a pipe segment 10 connected to the tank 1, preferably directly connected to the tank 1; and a pipe segment 11, connected to the dosing device 2, preferably directly connected to the dosing device 2, preferably at its bottom wall 21. Preferably, the pipe 20 is distinct from the dosing device 2, and preferably has a smaller section than the dosing device 2.

The valve 5' is arranged between the pipe segment 10 and the pipe segment 11, and between the pipe segment 11 and a second pipe 12 which takes the water to the steam generator 3. The pipe segment 10 and the second pipe 12 are not in mutual communication.

In a first position shown in Figure 3, the valve 5' puts the pipe segment 10 into communication with the pipe segment 11 and cuts off the communication between pipe segment 11 and second pipe 12.

In a second position, shown in Figure 4, the valve 5' puts the pipe segment 11 into communication with the second pipe 12 and cuts off the communication between the pipe segment 10 and the pipe segment 11.

Preferably, the valve 5' is proximal to the dosing device 2 and distal from the tank 1. For example, the minimum distance between the valve 5' and the dosing device 2 is preferably smaller than the minimum distance between the valve 5' and the tank 1. The working cycle of this second embodiment of the evaporation system is the following.

In the first step F1, the valve 5' is in the first position and the water flows from the tank 1 to the dosing device 2 in which it is established the dosing level by means of the communicating vessel principle.

In the second step F2, the valve 5' moves into the second position so that the water flows from the dosing device 2 towards the steam generator 3. The valve 5' moves back to the first position when the prescribed dosage of water is reached in the steam generator 3, whereby preventing the possible overpressure which is formed with the evaporation of water to make the water flow back towards the dosing device 2. The steam generator 3 is heated until the dosed water evaporates and then the steam is made to exit through the pipe 13 into the space in which it will be used. The cycle can be repeated until the desired amount of steam is obtained.

Preferably, both embodiments described above advantageously provide that the steam generator allows an accumulation of water therein.

Preferably but not exclusively, in both embodiments, the steam generator has a maximum power from 350 W to 3500 W, preferably from 700 W to 1750 W.

Advantageously, the various embodiments of steam generation systems illustrated above in detail, by using a single two-way, two-position valve or a three-way, two-position valve dose an amount of water suitable for the steam generation in a simple and cost-effective manner, and according to adequate modes and amounts for use in major household appliances, for example but not exclusively ovens, tumble dryers, washing machines and dishwashers.

The steam generation system is controlled by a control device (not shown) which actuates the valve 5 or 5' as a function of the amount of water which must be transformed into steam and other factors known to those skilled in the art in the field of household appliances.

According to an aspect, the invention further comprises an electric household appliance comprising a steam generation system according to the invention.

In particular, according to an aspect, the invention further comprises a household tumble dryer (not shown) comprising a space for the laundry to be dried, e.g. a basket, and a steam generation system, in which the steam generator 3 is connected to the laundry space by means of the pipe 13, whereby the steam generated by the steam generator 3 can be introduced into the laundry space.

According to another aspect, the invention further comprises a household oven comprising a space for cooking food, wherein the steam generator 3 is connected to said space by means of the pipe 13, whereby the steam generated by the steam generator 3 is adapted to be introduced into said cooking space.

## Claims

1. A steam generation system for a household appliance, comprising
- a tank (1) adapted to contain a liquid to be heated to generate the steam;
**characterized in that** it comprises
- a dosing device (2);
- a first pipe (20) adapted to connect the tank (1) to the dosing device (2), the tank (1) and the dosing device (2) being arranged so as to define a communicating vessel system;
- a steam generator (3) arranged downstream of the tank (1) and of the dosing device (2);
- a second pipe (12) adapted to connect at least one part (11) of the first pipe (20) to the steam generator (3);
- a valve (5, 5') having a first position in which it allows the passage of liquid from said at least one part (11) of the first pipe (20) to the steam generator (3), and a second position in which it prevents the passage of liquid from said at least one part (11) of the first pipe (20) to the steam generator (3).

2. A steam generation system according to claim 1, wherein said valve (5, 5') is an intercept valve.

3. A steam generation system according to claim 1 or 2, wherein said valve (5') is a three-way, two-position valve.

4. A steam generation system according to any one of the preceding claims, wherein when the valve (5') is in said first position the dosing device (2) is connected to the steam generator (3) by means of said at least one part (11) of the first pipe (20) and by means of the second pipe (12);
and wherein when the valve (5') is in said second position the dosing device (2) is connected to the tank (1) by means of said first pipe (20) and is disconnected from the steam generator (3).

5. A steam generation system according to any one of the preceding claims, wherein when the valve (5') is in said first position, the steam generator (3) is connected only to the dosing device (2); and/or wherein when the valve (5') is in said second position the dosing device (2) is connected only to the tank (1).

6. A steam generation system according to claim 1 or 2, wherein said valve (5) is a two-way, two-position valve.

7. A steam generation system according to claim 1, 2 or 6, wherein when the valve (5) is in the first position the second pipe (12) is connected to the first pipe (10, 11) so that the steam generator (3) can receive liquid from both the tank (1) and the dosing device (2).

8. A steam generation system according to claim 1, 2, 6 or 7, wherein a choke (4) is provided along the first pipe (10, 11), arranged so as to limit the flow rate of the liquid from the tank (1) to the steam generator (3) when the valve (5) is in said first position.

9. A steam generation system according to any one of the preceding claims, wherein the dosing device (2) is completely outside the tank (1).

10. A steam generation system according to any one of the preceding claims, wherein the dosing device (2) is provided with a bottom wall (21).

11. A method of operating a steam generation system for a household appliance according to any one of the preceding claims, wherein the following steps are included:
a) providing a liquid in the tank (1), and the valve (5, 5') in the second position to fill the dosing device (2) through the first pipe (10, 11) by means of the communicating vessel principle;
b) arranging the valve (5, 5') in the first position to make the liquid present in the dosing device (2) flow in the steam generator (3);
c) arranging the valve (5, 5') in the second position and heating the steam generator (3) until the liquid present in the steam generator (3) evaporates.

12. A method according to claim 11, wherein during the step b) either the steam generator (3) receives liquid only from the dosing device (2) or the steam generator (3) receives liquid both from the tank (1) and that from the dosing device (2).

13. A household appliance comprising a steam generation system according to any one of the claims from 1 to 10.

14. A household appliance according to claim 13, wherein the household appliance is a tumble dryer comprising a space for the laundry to be dried, and wherein the steam generator (3) is connected to said space by means of a pipe (13), so that the steam generated by the steam generator (3) is adapted to be introduced into said space; or wherein the household appliance is an oven comprising a space for cooking food, wherein the steam generator (3) is connected to said space by means of a pipe (13), so that the steam generated by the steam generator (3) is adapted to be introduced into said space.

## Patentansprüche

1. Dampferzeugungssystem für ein Haushaltsgerät, aufweisend:
- einen Tank (1), der dazu ausgebildet, eine zur Dampferzeugung zu erhitzende Flüssigkeit zu enthalten;
**dadurch gekennzeichnet, dass** es ferner aufweist:
- eine Dosiervorrichtung (2);
- eine erste Leitung (20), die dazu ausgebildet ist, den Tank (1) mit der Dosiervorrichtung (2) zu verbinden, wobei der Tank (1) und die Dosiervorrichtung (2) so angeordnet sind, dass sie ein kommunizierendes Gefäßsystem bilden;
- einem Dampferzeuger (3), der dem Tank (1) und der Dosiervorrichtung (2) nachgeschaltet ist;
- eine zweite Leitung (12), die dazu ausgebildet ist, mindestens einen Teil (11) der ersten Leitung (20) mit dem Dampferzeuger (3) zu verbinden;
- ein Ventil (5, 5') mit einer ersten Stellung, in der es den Durchfluss von Flüssigkeit von dem mindestens einen Teil (11) der ersten Leitung (20) zu dem Dampferzeuger (3) zulässt, und einer zweiten Stellung, in der es den Durchgang von Flüssigkeit von dem mindestens einen Teil (11) der ersten Leitung (20) zu dem Dampferzeuger (3) verhindert.

2. Dampferzeugungssystem nach Anspruch 1, wobei das Ventil (5, 5') ein Unterbrechungsventil ist.

3. Dampferzeugungssystem nach Anspruch 1 oder 2, wobei das Ventil (5') ein Dreiwegeventil mit zwei Stellungen ist.

4. Dampferzeugungssystem nach einem der vorhergehenden Ansprüche, wobei in der ersten Stellung des Ventils (5') die Dosiervorrichtung (2) über den mindestens einen Teil (11) der ersten Leitung (20) und über die zweite Leitung (12) mit dem Dampferzeuger (3) verbunden ist;
und wobei, in der zweiten Stellung des Ventils (5') die Dosiervorrichtung (2) über die erste Leitung (20) mit dem Tank (1) verbunden und vom Dampferzeuger (3) abgekoppelt ist.

5. Dampferzeugungssystem nach einem der vorhergehenden Ansprüche, wobei in der ersten Stellung des Ventils (5') der Dampferzeuger (3) nur mit der Dosiereinrichtung (2) verbunden ist; und/oder wobei in der zweiten Stellung des Ventils (5') die Dosiereinrichtung (2) nur mit dem Tank (1) verbunden ist.

6. Dampferzeugungssystem nach Anspruch 1 oder 2, wobei das Ventil (5) ein Zweiwegeventil mit zwei Stellungen ist.

7. Dampferzeugungssystem nach Anspruch 1, 2 oder 6, wobei in der ersten Stellung des Ventils (5) die zweite Leitung (12) mit der ersten Leitung (10, 11) verbunden ist, so dass der Dampferzeuger (3) Flüssigkeit sowohl aus dem Tank (1) als auch aus der Dosiervorrichtung (2) aufnehmen kann.

8. Dampferzeugungssystem nach Anspruch 1, 2, 6 oder 7, wobei eine Drossel (4) entlang der ersten Leitung (10, 11) vorgesehen ist, die so angeordnet ist, dass sie die Durchflussrate der Flüssigkeit vom Tank (1) zum Dampferzeuger (3) begrenzt, wenn sich das Ventil (5) in der ersten Stellung befindet.

9. Dampferzeugungssystem nach einem der vorhergehenden Ansprüche, wobei sich die Dosiervorrichtung (2) vollständig außerhalb des Tanks (1) befindet.

10. Dampferzeugungssystem nach einem der vorhergehenden Ansprüche, wobei die Dosiervorrichtung (2) mit einer Bodenwand (21) versehen ist.

11. Verfahren zum Betreiben eines Dampferzeugungssystems für ein Haushaltsgerät nach einem der vorhergehenden Ansprüche, wobei die folgenden Schritte enthalten sind:
a) Bereitstellen einer Flüssigkeit in dem Tank (1) und des Ventils (5, 5') in der zweiten Position, um die Dosiervorrichtung (2) durch die erste Leitung (10, 11) mittels des Prinzips des kommunizierenden Gefäßes zu füllen;
b) Anordnen des Ventils (5, 5') in der ersten Position, um die in der Dosiervorrichtung (2) vorhandene Flüssigkeit in den Dampferzeuger (3) fließen zu lassen;
c) Anordnen des Ventils (5, 5') in der zweiten Position und Erhitzen des Dampferzeugers (3), bis die im Dampferzeuger (3) vorhandene Flüssigkeit verdampft.

12. Verfahren nach Anspruch 11, wobei während des Schritts b) entweder der Dampferzeuger (3) nur Flüssigkeit von der Dosiereinrichtung (2) erhält oder der Dampferzeuger (3) sowohl Flüssigkeit vom Tank (1) als auch von der Dosiereinrichtung (2) erhält.

13. Haushaltsgerät mit einem Dampfrationssystem nach einem der Ansprüche 1 bis 10.

14. Haushaltsgerät nach Anspruch 13, wobei das Haushaltsgerät ein Wäschetrockner ist, der einen Raum für die zu trocknende Wäsche umfasst, und wobei der Dampferzeuger (3) mit diesem Raum mittels einer Leitung (13) verbunden ist, so dass der vom Dampferzeuger (3) erzeugte Dampf in den Raum eingeführt wird; oder wobei das Haushaltsgerät ein Ofen mit einem Raum zum Kochen von Lebensmitteln ist, wobei der Dampferzeuger (3) mit diesem Raum mittels einer Leitung (13) verbunden ist, so dass der vom Dampferzeuger (3) erzeugte Dampf in den Raum eingeführt wird.

## Revendications

1. Système de génération de vapeur pour un appareil électroménager, comprenant
- un réservoir (1) adapté pour contenir un liquide à chauffer pour générer la vapeur ;
**caractérisé en ce qu'**il comprend
- un dispositif de dosage (2) ;
- un premier conduit (20) adapté pour relier le réservoir (1) au dispositif de dosage (2), le réservoir (1) et le dispositif de dosage (2) étant agencés de façon à définir un système de vases communicants ;
- un générateur de vapeur (3) agencé en aval du réservoir (1) et du dispositif de dosage (2) ;
- un second conduit (12) adapté pour relier au moins une partie (11) du premier conduit (20) au générateur de vapeur (3) ;
- une vanne (5, 5') ayant une première position dans laquelle elle permet le passage de liquide de ladite au moins une partie (11) du premier conduit (20) au générateur de vapeur (3), et une seconde position dans laquelle elle empêche le passage de liquide de ladite au moins une partie (11) du premier conduit (20) au générateur de vapeur (3).

2. Système de génération de vapeur selon la revendication 1, dans lequel ladite vanne (5, 5') est une vanne d'interception.

3. Système de génération de vapeur selon la revendication 1 ou 2, dans lequel ladite vanne (5') est une vanne à trois voies et à deux positions.

4. Système de génération de vapeur selon l'une quelconque des revendications précédentes, dans lequel lorsque la vanne (5') est dans ladite première position, le dispositif de dosage (2) est relié au générateur de vapeur (3) au moyen de ladite au moins une partie (11) du premier conduit (20) et au moyen du second conduit (12) ;
et dans lequel lorsque la vanne (5') est dans ladite seconde position, le dispositif de dosage (2) est relié au réservoir (1) au moyen dudit premier conduit (20) et est débranché du générateur de vapeur (3).

5. Système de génération de vapeur selon l'une quelconque des revendications précédentes, dans lequel lorsque la vanne (5') est dans ladite première position, le générateur de vapeur (3) est relié uniquement au dispositif de dosage (2) ; et/ou dans lequel lorsque la vanne (5') est dans ladite seconde position, le dispositif de dosage (2) est relié uniquement au réservoir (1).

6. Système de génération de vapeur selon la revendication 1 ou 2, dans lequel ladite vanne (5) est une vanne à deux voies et à deux positions.

7. Système de génération de vapeur selon la revendication 1, 2 ou 6, dans lequel lorsque la vanne (5) est dans la première position, le second conduit (12) est relié au premier conduit (10, 11) de sorte que le générateur de vapeur (3) puisse recevoir du liquide provenant à la fois du réservoir (1) et du dispositif de dosage (2).

8. Système de génération de vapeur selon la revendication 1, 2, 6 ou 7, dans lequel un étranglement (4) est ménagé le long du premier conduit (10, 11), agencé de façon à limiter le débit du liquide du réservoir (1) au générateur de vapeur (3) lorsque la vanne (5) est dans ladite première position.

9. Système de génération de vapeur selon l'une quelconque des revendications précédentes, dans lequel le dispositif de dosage (2) est complètement à l'extérieur du réservoir (1).

10. Système de génération de vapeur selon l'une quelconque des revendications précédentes, dans lequel le dispositif de dosage (2) est muni d'une paroi de fond (21).

11. Procédé de fonctionnement d'un système de génération de vapeur pour un appareil électroménager selon l'une quelconque des revendications précédentes, dans lequel les étapes suivantes sont incluses :
a) ménager un liquide dans le réservoir (1), et la vanne (5, 5') dans la seconde position pour remplir le dispositif de dosage (2) par le biais du premier conduit (10, 11) au moyen du principe des vases communicants ;
b) agencer la vanne (5, 5') dans la première position pour amener le liquide présent dans le dispositif de dosage (2) à s'écouler dans le générateur de vapeur (3) ;
c) agencer la vanne (5, 5') dans la seconde position et chauffer le générateur de vapeur (3) jusqu'à ce que le liquide présent dans le générateur de vapeur (3) s'évapore.

12. Procédé selon la revendication 11, dans lequel au cours de l'étape b) soit le générateur de vapeur (3) reçoit du liquide provenant uniquement du dispositif de dosage (2) soit le générateur de vapeur (3) reçoit du liquide provenant à la fois du réservoir (1) et celui provenant du dispositif de dosage (2).

13. Appareil électroménager comprenant un système de génération de vapeur selon l'une quelconque des revendications 1 à 10.

14. Appareil électroménager selon la revendication 13, dans lequel l'appareil électroménager est un sèche-linge comprenant un espace pour le linge à sécher, et dans lequel le générateur de vapeur (3) est relié audit espace au moyen d'un conduit (13), de sorte que la vapeur générée par le générateur de vapeur (3) soit adaptée pour être introduite dans ledit espace ;
ou dans lequel l'appareil électroménager est un four comprenant un espace pour la cuisson d'aliments, dans lequel le générateur de vapeur (3) est relié audit espace au moyen d'un conduit (13), de sorte que la vapeur générée par le générateur de vapeur (3) soit adaptée pour être introduite dans ledit espace.
